# EUROPÄISCHE PATENTSCHRIFT

(11) **EP 0 358 875 B1**
(45) Veröffentlichungstag und Bekanntmachung des Hinweises auf die Patenterteilung: **29.03.1995**
(21) Anmeldenummer: 89112523.9
(22) Anmeldetag: 08.07.1989
(51) Int. Cl.: H04N 9/79, H04N 9/82, H04N 5/94

(54) **Verfahren und Anordnung zur Aufzeichnung und Wiedergabe der in einem Fernsehsignal im Zeitmultiplex mit der Bildinformation übertragenen Datenpakete**
Method and arrangement for recording and playback of data packets transmitted in time multiplex with the picture signal of a television signal
Procédé et dispositif d'enregistrement et reproduction de paquets de données transmis par multiplexage temporel avec le signal d'image d'un signal de télévision

(30) Priorität: 15.09.1988 DE 3831330
(43) Veröffentlichungstag der Anmeldung: 21.03.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Richter, Manfred c/o Grundig E.M.V.Max Grundig, D-8510 Fürth/Bay (DE)

(56) Entgegenhaltungen:
- EP-A- 0 171 759
- DE-A- 3 629 657
- US-A- 4 689 695
- FUNKSCHAU vol. 59, no. 25, April 1987,MÜNCHEN pages 42 - 46; ANONYMOUS: 'VIDEORECORDER: "LOSGELöST VON DEN NORMEN"'

## Beschreibung

Die Erfindung betrifft ein Verfahren zur Aufzeichnug des in einem Fernsehsignal im Zeitmultiplex mit der Bildinformation übertragenen Datenpaketes mit den im Oberbegriff des Anspruchs 1 angegebenen Merkmalen. Ferner betrifft die Erfindung ein Verfahren zur Wiedergabe sowie Anordnungen zur Durchführung der genannten Verfahren.

Ein Verfahren zur Aufzeichnung bzw. Wiedergabe des in einem Fernsehsignal im Zeitmultiplex mit der Bildinformation übertragenen Datenpaketes ist aus der DE-A- 36 29 657 der Anmelderin bekannt. Bei diesem bekannten Verfahren werden die Datenpakete einer jeden Zeile mittels eines Zeittores aus dem Fernsehsignal abgetrennt, zu jedem Datenpaket zusätzlich eine zeitverzögerte Version gebildet, sämtliche Datenpakete einer Mehrpegelcodierung unterworfen und die einer Zeile zugehörigen, mehrfach vorliegenden Informationen zueinander zeitversetzt auf verschiedenen Schrägspuren eines Aufzeichnungsträgers aufgezeichnet. Bei der Wiedergabe eines derartig aufgezeichneten Datenpaketes kann im Falle eines Dropouts die jeweils in der anderen Spur aufgezeichnete Information anstelle der gestörten Information ausgewertet werden. Bei diesem bekannten Verfahren ist aufzeichnungsseitig eine Codierung und wiedergabeseitig eine Decodierung der Datenpakete notwendig.

Ausgehend von diesem Stand der Techik liegt der Erfindung die Aufgabe zugrunde, ein Verfahren zur Aufzeichnung des in einem Fernsehsignal im Zeitmultiplex mit der Bildinformation übertragenen Datenpaketes anzugeben, welches ohne eine Codierung der Datenpakete auskommt und dennoch die Voraussetzungen für eine wiedergabeseitige Dropoutkompensation für die Datenpakete schafft.

Diese Aufgabe wird bei einem Verfahren der im Oberbegriff des Anspruchs 1 angegebenen Art durch die im kennzeichnenden Teil des Anspruchs 1 angegebenen Merkmale gelöst. Im Anspruch 2 ist ein Verfahren zur Wiedergabe beschrieben. Die Ansprüche 3 und 4 betreffen Anordnungen zur Durchführung der vorgenannten Verfahren.

Die Vorteile der Erfindung ergeben sich aus der Erläuterung von Ausführungsbeispielen anhand der Figuren 1 - 4. Es zeigt:
- Figur 1 ein Diagramm zur Erläuterung der Prinzipiellen Funktionsweise der Erfindung,
- Figur 2 ein Blockschaltbild zur beispielhaften Erläuterung der aufzeichnungsseitigen Signalverarbeitung,
- Figur 3 ein Blockschaltbild zur beispielhaften Erläuterung der wiedergabeseitigen Signalverarbeitung, und
- Figur 4 ein Diagramm, aus dem der Aufbau des Speichers 3 von Figur 2 und die Aufteilung der Eingangszeilen auf die Zeilenspeicher und die Aufzeichnungskanäle hervorgeht.

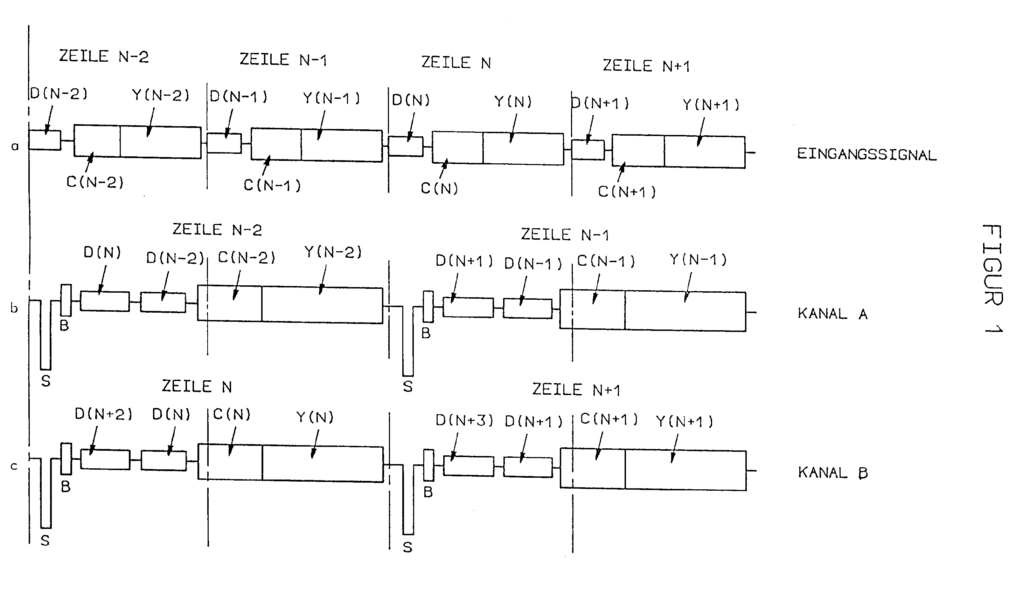

Die Figur 1 zeigt ein Diagramm zur Erläuterung der Prinzipiellen Funktionsweise der Erfindung. Aus Figur 1a sind die Zeilen N-2, N-1, N und N+1 des Eingangssignals, welches beispielsweise ein D2-MAC-Satelliten-Fernsehsignal sein kann, ersichtlich. Die Zeile N-2 enthält zeitlich nacheinander ein Datenpaket D (N-2), eine Chrominanzinformation C (N-2) und eine Luminanzinformation Y (N-2). Die Zeile N-1 enthält zeitlich nacheinander ein Datenpaket D (N-1), eine Chrominanzinformation C (N-1) und eine Luminanzinformation Y (N-1). Die Zeile N enthält zeitlich nacheinander ein Datenpaket D (N), eine Chrominanzinformation C (N) und eine Luminanzinformation Y (N). Die Zeile N+1 enthält zeitlich nacheinander ein Datenpaket D (N+1), eine Chrominanzinformation C (N+1) und eine Luminanzinformation Y (N+1).

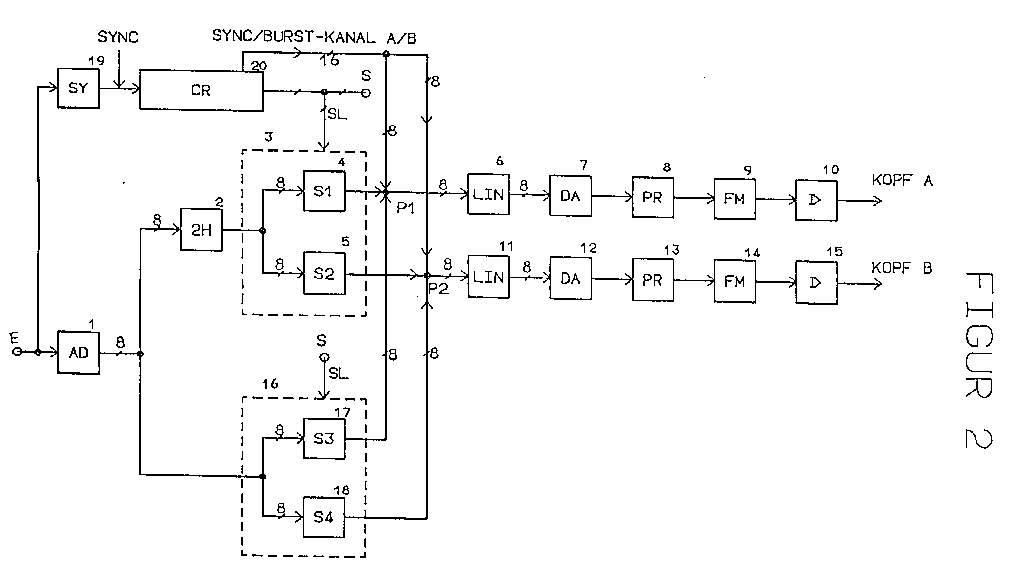

Das in Figur 1a gezeigte Signal wird in einer Schaltung, die unten anhand von Figur 2 näher erläutert wird, derart verarbeitet, daß zu jedem Datenpaket eine zusätzliche Version gebildet wird. Dieses zusätzliche Datenpaket wird zeitlich gedehnt und zeitlich vor dem Datenpaket einer anderen, ebenfalls zeitlich gedehnten Zeile eingesetzt. Das so erhaltene Gesamtsignal wird ferner mit einem Synchronsignal und einem Burst versehen und auf die Aufzeichnungskanäle 1 und 2 derart aufgeteilt, wie es in den Figuren 1b und 1c Prinzipiell dargestellt ist. Es wird darauf hingewiesen, daß die in Figur 1b und 1c gezeigten Signale gegenüber dem Signal in Figur 1a zeitlich verzögert sind, was aus der Zeichnung nicht hervorgeht.

Die Figur 1b zeigt die dem Aufzeichnungskanal A zugeführten Signale. Die zeitlich gedehnte Zeile N-2 enthält zeitlich nacheinander ein Synchronsignal S, einen Burst B, das Datenpaket D (N), das Datenpaket D (N-2), die Chrominanzinformation C (N-2) und die Luminanzinformation Y (N-2). Die zeitlich gedehnte Zeile N-1 enthält zeitlich nacheinander ein Synchronsignal S, einen Burst B, das Datenpaket D (N+1), das Datenpaket D (N-1), die Chrominanzinformation C (N-1) und die Luminanzinformation Y (N-1).

Die Figur 1c zeigt die dem Aufzeichnungskanal B zugeführten Signale. Die zeitlich gedehnte Zeile N enthält zeitlich nacheinander ein Synchronsignal S, einen Burst B, das Datenpaket D (N+2), das Datenpaket D (N), die Chrominanzinformation C (N) und die Luminanzinformation Y (N). Die zeitlich gedehnte Zeile N+1 enthält zeitlich nacheinander ein Synchronsignal S, einen Burst B, das Datenpaket D (N+3), das Datenpaket D (N+1), die Chrominanzinformation C (N+1) und die Luminanzinformation Y (N+1).

Die Figur 2 zeigt ein Blockschaltbild zur beispielhaften Erläuterung der aufzeichnungsseitigen Signalverarbeitung. Dem Eingang E wird ein Satelliten-Fernsehsignal nach dem D2-MAC-Standard zugeführt. Ein Vollbild dieses Satelliten-Fernsehsignals weist insgesamt 625 Zeilen auf. Die meisten dieser Zeilen enthalten - wie es bereits im Zusammenhang mit der Figur 1a beschrieben wurde - im Zeitmultiplex ein Datenpaket, eine Chrominanzinformation und eine Luminanzinformation.

Dieses D2-MAC-Signal wird in einem A/D-Wandler 1 in ein digitales Signal umgewandelt. Dieses digitale Signal gelangt über eine 2-Zeilen-Verzögerungsschaltung 2 an einen ersten Speicher 3, welcher aus zwei Speichereinheiten 4 und 5 bestehen kann, wobei die Speichereinheit 4 in einem ersten Aufzeichnungskanal und die Speichereinheit 5 in einem zweiten Aufzeichnungskanal angeordnet ist. In den Speichereinheiten 4 und 5 werden die einzelnen Zeilen des um zwei Zeilen verzögerten digitalen Signals zeitexpandiert. Weiterhin wird das digitale Signal vom Ausgang des A/D-Wandlers 1 einem zweiten Speicher 16 zugeführt, welcher aus zwei Speichereinheiten 17 und 18 bestehen kann. Die Speicher 3 und 16 können dabei gleich aufgebaut sein. In den Speichereinheiten 17 und 18 werden die einzelnen Zeilen des unverzögerten digitalen Signals zeitexpandiert.

Die den Speichern 3 und 16 zugeordneten Einschreib- und Auslesevorgänge werden von einer Steuerschaltung 20 über einen Steuerbus SL gesteuert. Die Steuerschaltung 20 erzeugt den Einschreib- und den Auslesetakt unter Auswertung eines Synchronsignals, welches unter Verwendung eines Synchronsignalgenerators 19 aus dem am Eingang E anliegenden D2-MAC-Signal abgeleitet wird.

Das Ausgangssignal der Speichereinheit 4 wird einem Schaltungspunkt P1 zugeführt und dort mit den zusätzlichen Datenpaketen, die am Ausgang der Speichereinheit 17 zur Verfügung gestellt werden und welche dem Datenpaket der übernächsten Zeile des D2-MAC-Signals entsprechen, sowie mit Synchronsignalen und Burstsignalen, welche in der Steuerschaltung 20 erzeugt werden, versehen.

Vom Schaltungspunkt P1 aus wird das Signal einer Schaltung 6 zugeführt, in der in eine durch eine geeignete Speichersteuerung geschaffene Lücke ein Rampensignal oder ein Mehrpegelsignal eingefügt wird. Dieses Rampensignal bzw. Mehrpegelsignal wird wiedergabeseitig zur Signalentzerrung verwendet. Diese Signalentzerrung ist beispielsweise in der europäischen Patentanmeldung 0 171 759 näher beschrieben.

Vom Ausgang der Schaltung 6 gelangt das Signal an einen D/A-Wandler 7, eine Preemphasisstufe 8, einen Frequenzmodulator 9, einen Verstärker 10 und Wird schließlich von einem Aufzeichnungskopf A in einer ersten Schrägspur eines Videomagnetbandrecorders aufgezeichnet.

Das Ausgangssignal der Speichereinheit 5 Wird einem Schaltungspunkt P2 zugeführt und dort mit den zusätzlichen Datenpaketen, die am Ausgang der Speichereinheit 18 zur Verfügung gestellt werden, und welche dem Datenpaket der übernächsten Zeile des D2-MAC-Signals entsprechen, sowie mit Synchronsignalen und Burstsignalen, welche in der Steuerschaltung 20 erzeugt werden, versehen.

Vom Schaltungspunkt P2 aus wird das Signal einer Schaltung 11 zugeführt, in der in eine durch eine geeignete Speichersteuerung geschaffene Lücke ein Rampensignal oder ein Mehrpegelsignal eingefügt wird. Dieses Rampensignal bzw. Mehrpegelsignal wird wiedergabeseitig zur Signalentzerrung verwendet.

Vom Ausgang der Schaltung 11 gelangt das Signal an einen D/A-Wandler 12, eine Preemphasisstufe 13, einen Frequenzmodulator 14, einen Verstärker 15 und wird schließlich von einem Aufzeichnungskopf B in einer zweiten Schrägspur des Videomagnetbandrecorders aufgezeichnet.

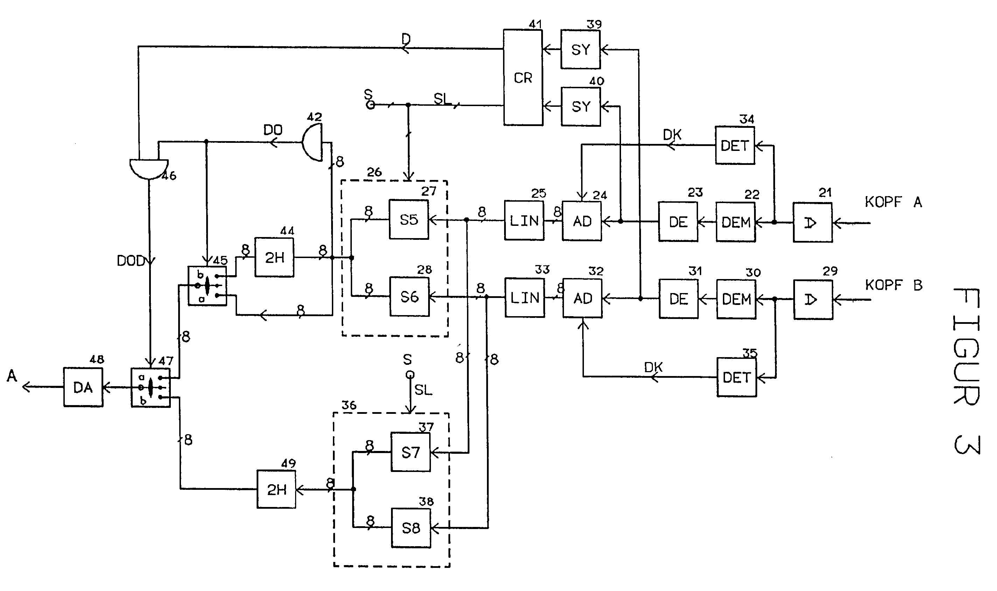

Die Figur 3 zeigt ein Blockschaltbild zur beispielhaften Erläuterung der wiedergabeseitigen Signalverarbeitung.

Das in einer ersten Schrägspur des Videomagnetbandrecorders aufgezeichnete Signal wird von einem Wiedergabekopf A gelesen und über einen Wiedergabeverstärker 21 einem FM-Demodulator 22 zugeführt. Das demodulierte Signal gelangt über eine Deemphasisstufe 23 an einen A/D-Wandler 24 und wird dort in ein digitales Signal umgesetzt. Das digitale Signal wird einer Lineraritätsschaltung 25 zugeführt, in der das aufzeichnungsseitig eingefügte Rampen- bzw. Mehrpegelsignal im Sinne einer Signalentzerrung ausgewertet wird. Das entzerrte Signal wird einer Speichereinheit 27 eines Speichers 26 zugeführt.

Das in einer zweiten Schrägspur des Videomagnetbandrecorders aufgezeichnete Signal wird von einem Wiedergabekopf B gelesen und über einen Wiedergabeverstärker 29 einem FM-Demodulator 30 zugeführt. Das demodulierte Signal gelangt über eine Deemphasisstufe 31 an einen A/D-Wandler 32 und wird dort in ein digitales Signal umgesetzt. Das digitale Signal wird einer Linearitätsschaltung 33 zugeführt, in der das aufzeichnungsseitig eingefügte Rampen- bzw. Mehrpegelsignal im Sinne einer Signalentzerrung ausgewertet wird. Das entzerrte Signal wird einer Speichereinheit 28 des Speichers 26 zugeführt.

Im Speicher 26 bzw. in dessen Speichereinheiten 27 und 28 werden die Signale im wesentlichen zeitkomprimiert, zeitfehlerkorrigiert und zu einem einkanaligen Signal zusammengefaßt.

Bei ungestörtem Signal, d.h. wenn kein Dropout vorliegt, gelangt das einkanalige Signal über einen Schalter 45, dessen beweglicher Kontakt sich in der Stellung a befindet, einen Schalter 47, dessen beweglicher Kontakt sich ebenfalls in der Stellung a befindet und einen D/A-Wandler 48 an den Ausgang der Schaltung.

Weiterhin wird das Ausgangssignal der Linearitätsschaltung 25 einer Speichereinheit 37 eines weiteren Speichers 36 und das Ausgangssignal der Linearitätsschaltung 33 einer Speichereinheit 38 des weiteren Speichers 36 zugeführt. Der weitere Speicher 36 kann dabei ebenso aufgebaut sein wie der Speicher 26. Der wesentliche Zweck des Speichers 36 besteht darin, das aufzeichnungsseitig in jede Zeile des Signals eingefügte zusätzliche Datenpaket zu separieren, zeitlich wieder auf seine ursprüngliche Länge zu komprimieren und zeitfehlerkorrigiert im Datenzeilenintervall jeder Zeile zur Verfügung zu stellen. Das am Ausgang des weiteren Speichers 36 gelieferte Signal wird in einem Zweizeilenverzögerer 49 verzögert und an die Klemme b des Schalters 47 weitergeleitet. Im Falle eines Dropouts des Datenpaketes kann dann durch geeignete Umschaltung des Schalters 47 ein Ersatz-Datenpaket zeitrichtig in das wiedergegebene Signal eingefügt werden, wie unten noch beschrieben werden wird.

Die den Speichern 26 und 36 zugeordneten Einschreib- und Auslesevorgänge werden von einer Steuerschaltung 41 über einen Steuerbus SL gesteuert. Die Steuerschaltung 41 erzeugt den Schreib- und Auslesetakt unter Auswertung der Synchronsignale, die aufzeichnungsseitig in das Signal eingefügt wurden und wiedergabeseitig mittels Synchronsignaltrennstufen 39 und 40 aus den demodulierten Signalen der beiden Kanäle abgetrennt werden.

Im folgenden wird die Funktionsweise der in Figur 3 gezeigten Schaltung im Falle eines Dropouts eines Datenpaketes im Kanal B näher beschrieben. Zwischen dem Wiedergabeverstärker 29 und dem FM-Demodulator 30 wird das wiedergegebene Signal abgeleitet und einem Dropoutdetektor 35 zugeführt. Dieser erzeugt ein Dropout-Kennsignal DK, welches dem A/D-Wandler 32 zugeführt wird. Im A/D-Wandler 32 wird in Ansprache auf das Dropout-Kennsignal DK eine bestimmte Bitkombination, welche eigens für die Übertragung eines Dropout-Kennsignals reserviert wurde, und im wiedergegebenen Signal nicht auftritt, in das wiedergegebene zeitfehlerbehaftete Signal eingesetzt, durchläuft mit diesem den Speicher 26 und steht am Ausgang des Speichers 26 als Dropout-Kennsignal zur Verfügung. Weitere Einzelheiten zu einer derartigen Übertragung eines Dropout-Kennsignals zusammen mit dem wiedergegebenen Signal können der DE-OS 36 30 179 der Anmelderin entnommen werden.

Vom Ausgang des Speichers 26 wird das wiedergegebene Signal unter anderem einer logischen Schaltung 42 zugeführt, die erkennt, ob das Dropout-Kennsignal vorliegt oder nicht. Bei Vorliegen des Dropout-Kennsignals erzeugt die logische Schaltung 42 ein Signal DO hohen Pegels, welches an den Steuereingang des Schalters 45 und an einen ersten Eingang eines UND-Gliedes 46 angelegt wird. Der Schalter 45 wird beim Vorliegen eines Dropouts in die Schaltstellung b gebracht.

Am zweiten Eingang des UND-Gatters 46 liegt ein von der Steuerschaltung 41 erzeugtes Signal D an, welches in dem Zeitintervall jeder Zeilenperiode, in dem am Ausgang der Speicher 26 und 36 ein Datenpaket auftritt, einen hohen Pegel aufweist. Folglich wird bei vorhandenem Dropout-Kennsignal während der Dauer des Zeitintervalles jeder Zeilenperiode, in dem das Datenpaket auftritt, der Schalter 47 in seine Schaltstellung b gebracht und damit ein Datenpaket vom Ausgang des Zweizeilenverzögerers 49 in das über den Schalter 45 geleitete Signal eingetastet.

Zusammenfassend dargestellt wird beim Vorliegen eines Dropouts im Datenpaket einer Zeile x des Signals das aufzeichnungsseitig in die Zeile x-2 des Signals zusätzlich eingefügte Datenpaket der Zeile x in das Signal eingetastet. Da die Zeilen x und x-2 stets in unterschiedlichen Kanälen übertragen werden, können selbst beim Totalausfall eines Kanals sämtliche Datenpakete des Signals erhalten werden.

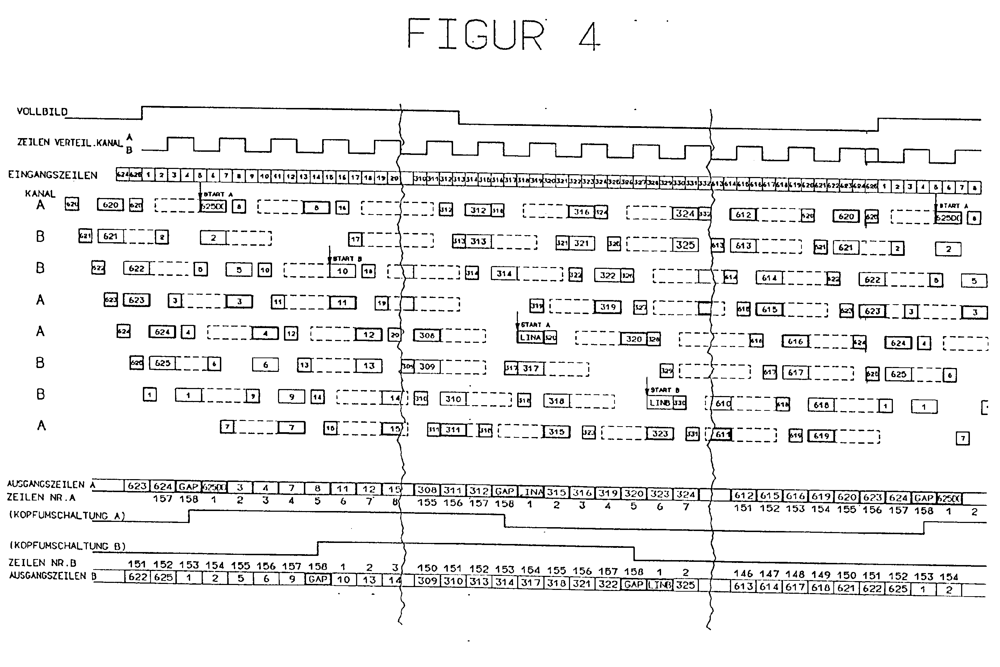

Die Figur 4 zeigt ein Diagramm, aus dem der Aufbau des Speichers 3 von Figur 2, die Aufteilung der Eingangszeiien auf die Zeilenspeicher und die Aufzeichnungskanäle hervorgeht. Der Speicher 3 besteht aus acht Zeilenspeichern, von denen vier in der Speichereinheit 4 bzw. im Kanal A und vier in der Speichereinheit 5 bzw. im Kanal B angeordnet sind.

Die beschriebene Speicherkonfiguration kann in vorteilhafter Weise auch zur Dropoutkompensation im Falle eines Dropouts in der 625. Zeile des D2MAC-Signals verwendet werden. Die gesamte 625. Zeile eines D2MAC-Signals beinhaltet normgemäß Datenwörter zur Initialisierung des Empfängers und zur Identifikation des Kanals und der Signalstruktur. Um auch diese Daten im Falle eines Dropouts erhalten zu können, wird aufzeichnungsseitig durch eine geeignete Speichersteuerung eine zusätzliche Version der 625. Zeile jedes Vollbildes gebildet. Diese zusätzliche Version der 625. Zeile wird einem anderen Aufzeichnungskanal und damit einer anderen Aufzeichnungsspur zugeordnet als die "normale" 625. Zeile. Vorzugsweise wird die zusätzliche Version der 625. Zeile am Spuranfang einer Spur und die "normale" Version der 625. Zeile am Spurende einer anderen Spur aufgezeichnet. Wird nun bei der Wiedergabe der 625. Zeile ein Dropout detektiert, so kann anstelle der gestörten 625. Zeile die aus dem anderen Kanal wiedergegebene zusätzliche Version der 625. Zeile zeitrichtig in das Signal eingesetzt werden.

## Patentansprüche

1. Verfahren zur Aufzeichnung der zeilenweise in einem Fernsehsignal im Zeitmultiplex mit der Bildinformation übertragenen Datenpakete, bei dem die einzelnen Zeilen des Fernsehsignals zeitexpandiert, auf mehrere Kanäle verteilt und gleichzeitig in verschiedenen Schrägspuren eines Aufzeichnungsträgers aufgezeichnet werden, bei dem zu jedem Datenpaket ein zusätzliches identisches Datenpaket gebildet wird, und bei dem Datenpaket und zusätzliches Datenpaket verschiedenen Schrägspuren des Aufzeichnungsträgers zugeordnet werden,
**dadurch gekennzeichnet**,
daß jedes zusätzliche Datenpaket im Zeitmultiplex mit dem Datenpaket und der Bildinformation einer vorherigen Zeile aufgezeichnet wird.

2. Verfahren zur Wiedergabe von nach dem Verfahren gemäß Anspruch 1 aufgezeichneten Signalen., bei welchem die aus mehreren Schrägspuren des Aufzeichnungsträgers wiedergegebenen Signale zeitkomprimiert, zeitfehlerkorrigiert und zu einem einkanaligen Signal zusammengefaßt werden,
**dadurch gekennzeichnet**,
daß die im Zeitmultiplex mit den Datenpaketen und der Bildinformation aufgezeichneten zusätzlichen Datenpakete aus dem wiedergegebenen Signal abgetrennt, verzögert und beim Vorliegen eines Dropouts so in das wiedergegebene Signal eingetastet werden, daß die durch Dropouts verlorengegangenen Datenpakete durch die mit ihnen identischen zusätzlichen Datenpakete ersetzt werden.

3. Anordnung zur Durchführung des Verfahrens gemäß Anspruch 1, mit einem ersten Speicher (3), in dem die einzelnen Zeilen des Fernsehsignals unter Steuerung durch eine Steuerschaltung (20), welcher die aus dem Fernsehsignal abgetrennten Synchronimpulse zugeführt werden, zeitexpandiert und auf mehrere Aufzeichnungskanäle verteilt werden,
**dadurch gekennzeichnet**, daß ein parallel zum erster Speicher (3) angeordneter zweiter Speicher (16) vorgesehen ist, welcher unter Steuerung durch die Steuerschaltung (20) an seinem Ausgang zeitexpandierte zusätzliche Datenpakete zur Verfügung stellt, daß das Eingangssignal des ersten Speichers (3) verzögert ist, und daß die Ausgangssignale des zweiten Speichers (16) unter Steuerung durch die Steuerschaltung (20) in die Ausgangssignale des ersten Speichers (3) eingetastet werden.

4. Anordnung zur Durchführung des Verfahrens gemäß Anspruch 2, mit einem ersten Speicher (26), in dem die aus den einzelnen Schrägspuren wiedergegebenen Signale unter Steuerung durch eine Steuerschaltung (41), die aus den in den einzelnen Kanälen wiedergegebenen Signalen abgetrennten Synchronimpulse zugeführt werden,
zeitkomprimiert, zeitfehlerkorrigiert und zu einem einkanaligen Signal zusammengefaßt werden,
**dadurch gekennzeichnet,** daß
· ein parallel zum ersten Speicher (26) angeordneter zweiter Speicher (36) vorgesehen ist, welchem die zeitexpandierten zusätzlichen Datenpakete zugeführt werden und welcher unter Steuerung durch die Steuerschaltung (41) an seinem Ausgang die zusätzlichen Datenpakete in ihrer ursprünglichen Form zur Verfügung stellt,
· an dem Ausgang des ersten Speichers (26) eine Schaltung (42, 44, 45) angeschlossen ist, die bei Vorliegen eines Dropouts ein verzögertes Signal zur Verfügung stellt, und
· ein Schalter (47) vorgesehen ist, unter dessen Verwendung beim Vorliegen eines Dropouts ein zusätzliches Datenpaket anstelle des Datenpaketes des am Ausgang der Schaltung (42, 44, 45) anstehenden Signals eingesetzt wird, das identisch mit dem durch Dropout verlorengegangenen Datenpaket ist.

## Claims

1. A method of recording the data packets recorded line by line in a television signal with the picture information in time division multiplex, wherein the individual lines of the television signal are temporally expanded, distributed between a plurality of channels and simultaneously recorded in different oblique tracks of a data carrier, wherein for each data packet an additional identical data packet is formed, and wherein data packet and additional data packet are assigned to different oblique tracks of the data carrier, characterised in that each additional data packet is recorded in time division multiplex with the data packet and the picture information of a preceding line.

2. A method of reproducing signals recorded in accordance with the method claimed in Claim 1, wherein the signals reproduced from a plurality of oblique tracks of the data carrier are temporally compressed, time-error-corrected and combined to form one single-channel signal, characterised in that the additional data packets recorded in time division multiplex with the data packets and the picture information are separated from the reproduced signal, delayed and in the presence of a dropout are keyed into the reproduced signal in such manner that the data packets lost as a result of dropouts are replaced by the additional data packets identical to themselves.

3. An arrangement for the implementation of the method claimed in Claim 1, with a first store (3) in which, under the control of a control circuit (20) which is supplied with the synchronizing pulses separated from the television signal, the individual lines of the television signal are temporally expanded and distributed between a plurality of recording channels, characterised in that a second store (16) is provided which is arranged in parallel to the first store (3) and which, under the control of the control circuit (20), makes temporally expanded additional data packets available at its output, that the input signal of the first store (3) is delayed, and that the output signals of the second store (16) are keyed into the output signals of the first store (3) under the control of the control circuit (20).

4. An arrangement for the implementation of the method claimed in Claim 2, with a first store (26) in which, under the control of a control circuit (41) which is supplied with the synchronizing pulses separated from the signals reproduced in the individual channels, the signals reproduced from the individual oblique tracks are temporally compressed, time-error-corrected and combined to form one single-channel signal, characterised in that
- a second store (36) is provided which is arranged in parallel to the first store (26), which second store (36) is supplied with the temporally expanded additional data packets and, under the control of the control circuit (41), at its output makes available the additional data packets in their original form,
- at the output of the first store (26) a circuit (42, 44, 45) is connected which in the presence of a dropout makes available a delayed signal and
- a switch (47) is provided with the use of which in the presence of a dropout an additional data packet is inserted in place of the data packet of the signal occurring at the output of the circuit (42, 44, 45), which additional data packet is identical to the data packet lost as a result of the dropout.

## Revendications

1. Procédé pour enregistrer des paquets de données, qui sont transmis ligne par ligne dans un signal de télévision au moyen du multiplexage temporel avec l'information d'image, selon lequel les différentes lignes du signal de télévision sont expansées dans le temps, réparties entre plusieurs canaux et enregistrées simultanément sur différentes pistes obliques d'un support d'enregistrement, et selon lequel pour chaque paquet de données est formé un paquet de données supplémentaire identique, et selon lequel des pistes d'enregistrement différentes du support d'enregistrement sont associées au paquet de données et au paquet de données supplémentaire, caractérisé en ce que chaque paquet de données supplémentaire est enregistré avec multiplexage temporel avec le paquet de données et l'information d'image d'une ligne précédente.

2. Procédé pour reproduire des signaux enregistrés selon le procédé conforme à la revendication 1, selon lequel les signaux reproduits à partir de plusieurs pistes obliques du support d'enregistrement sont comprimés dans le temps, corrigés vis à vis d'erreurs temporelles et réunis pour former un signal monocanal, caractérisé en ce que les paquets de données supplémentaires, qui sont enregistrés par multiplexage temporel avec les paquets de données et l'information d'image, sont séparés du signal reproduit, sont retardés et, dans le cas de la presence d'un manque de signal, sont insérés dans le signal reproduit de telle sorte que les paquets de données, qui sont perdus en raison de manques de signal, sont remplacés par des paquets de données supplémentaires, qui leur sont identiques.

3. Dispositif pour la mise en oeuvre du procédé selon la revendication 1, comprenant une première mémoire (3), dans laquelle les différentes lignes du signal de television sont expansées dans le temps et réparties entre plusieurs canaux d'enregistrement, sous la commande d'un circuit de commande (20), auquel sont envoyées les impulsions de synchronisation séparées du signal de télévision, caractérisé en ce qu'il est prévu une seconde mémoire (16), qui est disposée en parallèle avec la première mémoire (3) et qui, sous la commande du circuit de commande (20), délivre des paquets de données supplémentaires expansées dans le temps, au niveau de sa sortie, que le signal d'entrée de la première mémoire (3) est retardé et que les signaux de sortie de la seconde mémoire (16) sont insérés, sous la commande du circuit de commande (20), dans les signaux de sortie de la première mémoire (3).

4. Dispositif pour la mise en oeuvre du procédé selon la revendication 2, comportant une première mémoire (26), dans laquelle les signaux reproduits à partir des différentes pistes obliques sont comprimés dans le temps, corrigés vis à vis d'erreurs temporelles et réunis pour former un signal monocanal, sous la commande d'un circuit de commande (41), auquel sont envoyées les impulsions de synchronisation séparées des signaux reproduits dans les différents canaux, caractérisé en ce que
. il est prévu une seconde mémoire (36), qui est disposée en parallèle avec la première mémoire (26) et à laquelle sont envoyés les paquets de données supplémentaires expansées dans le temps et qui, sous la commande du circuit de commande (41), délivre, à sa sortie, les deux paquets de données supplémentaires sous leur forme initiale,
. à la sortie de la première mémoire (26) est raccordé un circuit (42,44,45), qui, dans le cas d'un manque de signal, délivre un signal retardé, et
. il est prévu un commutateur (47), moyennant l'utilisation duquel, dans le cas d'un manque de signal, un paquet de données supplémentaire, qui est identique au paquet de données perdu sous l'effet du manque de signal, est inséré à la place du paquet de données du signal présent à la sortie du circuit (42, 44,45).
